# EUROPEAN PATENT APPLICATION

(11) **EP 2 415 634 A1**
(43) Date of publication of application: **08.02.2012**
(21) Application number: 10758497.1
(22) Date of filing: 24.03.2010
(51) Int. Cl.: B60N 3/02, F16B 5/07, F16B 5/10, F16B 21/04

(54) **FIXTURE MOUNTING STRUCTURE AND INTERIOR ARTICLE MOUNTING STRUCTURE**

(30) Priority: 31.03.2009 JP 2009086487
(71) Applicant: Nifco INC., Yokohama-shi, Kanagawa 244-8522 (JP)
(72) Inventor: HAMAGUCHI, Tsuyoshi, Yokohama-shi Kanagawa 244-8522 (JP)
(74) Representative: Gassner, Wolfgang
(86) International application number: PCT/JP2010/055091
(87) International publication number: WO 2010/113723

(57) **Abstract**

A fixture mounting structure is provided with a base combined with fixtures and having an insertion section for insertion into a mounting hole in a panel, a lock member movably contained within the base, and an operation member slidably assembled to the base. An open section is formed in a side section of the insertion section of the base. Cam devices for moving the lock member to a predetermined position when the operation member is pushed in are provided to the lock member and the operation member. When the lock member is moved to the predetermined position, a part of the lock member is protruded from the opening section to prevent the base from coming out of the mounting hole in the panel.

## Description

### FIELD OF THE INVENTION

The invention relates to a mounting structure used to mount a wide variety of fixtures to a panel using a mounting hole opened in the panel.

### BACKGROUND ART

As a structure to mount fixtures to an automotive body panel using a locking bore provided in the panel, there is one wherein, by means of a metallic clip assembled thereto, a base member whose one part is inserted into a locking orifice of an automotive body panel is mounted in an automotive body panel and by means of the base member mounted in this way, an assist grip is mounted in the automotive body panel. (cf. Patent Document 1)

However, in a structure according to Patent Document 1, because the automotive body panel is made of metal, it is assumed that the clip should ideally be made of metal as well. But since the clip is made of a material different from that of the base member, it is not only difficult to expect a reduction of cost of components but is not suitable from the viewpoint of the recycling of resources. Further, if the clip is made of metal as above, there is caused an inconvenience that the metal of the automotive body panel and that of the clip come to grind against each other and cause noise at the time of the insertion of the automotive body panel into the locking bore. And when the assist grip is removed from the automotive body panel, it is necessary to disengage the engagement between the locking orifice and the clip and remove the clip after pulling the one part of the base member out of the locking orifice and this disassembly work is not necessarily easy. (paragraph No. 0027 of Patent Document 1)

### PRIOR ART DOCUMENT

Patent document 1: Patent No. 4106307, Official Gazette

### SUMMARY OF THE INVENTION

### PROBLEM TO BE SOLVED BY THE INVENTION

To settle the problems as described above, this invention is designed to provide the most suitable structure to mount a wide variety of fixtures to the automotive body panel using a mounting hole opened in the panel.

### MEANS OF SOLVING THE PROBLEMS:

To settle the problems as described above, in this invention, from a first viewpoint, the fixture mounting structure is designed to be configured as described in (1) through (7) below.
(1) A fixture mounting structure to mount a fixture to an automotive body panel using a mounting hole opened in the panel being provided with:
(2) a base forming a part of a fixture or assembled thereto and having an insertion section for insertion into a mounting hole in a panel;
(3) a lock member movably retained within the base;
(4) and an operation member slidably assembled to the base, wherein
(5) an open section is formed in a side section of the insertion section of the base,
(6) cam means for moving the lock member to a predetermined position when the operation member is pushed in is provided to the lock member and the operation member,
(7) when the lock member is moved to the predetermined position, a part of the lock member is protruded from the opening section to prevent the base from coming out of the mounting hole in the panel.

Further, in this invention, from a second viewpoint, the interior mounting structure is designed so that a fixture in the fixture mounting structure becomes an interior article of an automobile.

In such mounting structure, a fixture or an interior article can be mounted to an automotive body panel by preventing the insertion section from coming out of the mounting hole by moving the lock member to a predetermined position by pushing in the operation member after having had the insertion section of the base inserted into the mounting hole of the panel. Because the blocking of the movement of the insertion section is made by the movement of the lock member, it is not necessary to fit and put the insertion section of the base in the mounting hole strongly, nor to have the insertion section armored or sheathed with an extra metallic clip.
Thus, the insertion of the insertion section of the base into the mounting hole of the panel is easy, and does not cause any abnormal noises at the time of the insertion. Further, because all of the base, the operation member and the lock member can be made of a synthetic resin without inconvenience, such mounting structure contributes to the improvement of recyclability as well. Further, by returning the lock member in the predetermined position to the position before the movement, a fixture or an interior article can be removed from the panel easily and a second or a follow-up mounting after the disassembly can also be conducted without any drawback.

The lock member is rotatably supported by the base; the cam means is comprised of a cam face section following a direction around the rotating center of the lock member and an abutment section which is abutted against the cam face section by the pushing-in of the operation member; the lock member is provided with either one of the cam face section or the abutment section; and the operation member is provided with the other (of the cam face section or the abutment section). Thus, the lock member can be rotated to the predetermined position by the pushing-in of the operation member.

Further, the insertion section of the base is allowed to be inserted into the mounting hole of the panel by elastically transforming a part thereof and the insertion section becomes engaged with the hole edge of the mounting hole by elastically reverting back to the original state at the insertion end position. Thus, the base can be temporarily fastened to the panel by inserting the insertion section of the base into the mounting hole of the panel prior to the pushing-in of the operation member.

Further, the operation member is removably assembled to the base and in order to make it possible that the lock member rotated to the predetermined position can be rotated back to the position before the rotation by using a tool, so that there is formed in the lock member an engagement section to be engaged with the tool. By rotating the lock member back to the position before the rotation using a tool and having the tool engaged with the engagement section after having removed the operation member from the base, a part of the lock member can be drawn into the insertion section and the state wherein the base is prevented from coming out of the mounting hole of the panel by the lock member can be removed easily.

Further, if there is formed an engagement section which respectively engages with each other in the position before the pushing-in of the operation and after the pushing-in of the operation member in the base and the operation member, unless the operation member is pushed by a disengagement force as mentioned before, the lock member can be prevented from moving to a predetermined position and the state in which the lock member is in a predetermined position can be more stably maintained by such engagement in the position after the pushing-in of the operation member.

### EFFECT OF THE INVENTION:

For the mounting structure according to this invention, because all of the base member, the operation member and the lock member can be made of a synthetic resin without inconvenience, it is possible to contribute to reducing the cost of components, improving the recyclability, preventing abnormal noises from being produced at the time of the mounting to the mounting hole of the panel and facilitating the disassembly from the panel by the operation of the lock member.

### BRIEF DESCRIPTION OF THE DRAWINGS

FIG. 1 is an exploded perspective view showing each of the components forming the fixture mounting structure and a fixture.
FIG. 2 is a perspective view showing a state that the insertion section of the base forming the mounting structure is inserted in the mounting hole.
FIG. 3 is a perspective view showing a state that the mounting has been completed with the lock member forming part of the mounting structure having been twisted from the state of FIG. 2.
FIG. 4 is a front view showing an assembled base, the lock member and the operation member.
FIG. 5 is a side view showing an assembled base, the lock member and the operation member.
FIG. 6 is a bottom view showing an assembled base, the lock member and the operation member.
FIG. 7 is a cross-sectional view in the B-B line position in FIG. 6.
FIG. 8 is a cross-sectional view in the A-A line position in FIG. 4, in which the panel is represented at the same time.
FIG. 9 is a cross-sectional view at the time when the operation member has been pushed from the state of FIG. 8 and the mounting has been completed.
FIGS. 10(a) and 10(b) are perspective views of the lock member and FIG. 10(c) is a front view of the lock member.
FIGS. 11 (a) and 11 (b) are perspective views of the operation member.
FIG. 12 is a partially broken perspective view of the essential parts of the base after omitting the description of the operation member.
FIG. 13 is a partially broken perspective view of the essential parts showing the base.

### MODES OF CARRYING OUT THE INVENTION

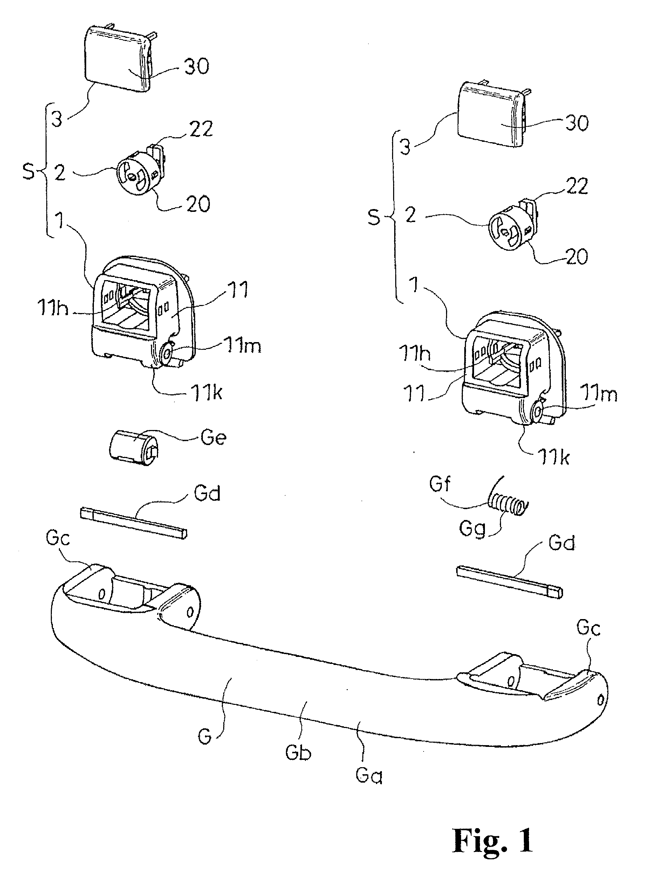

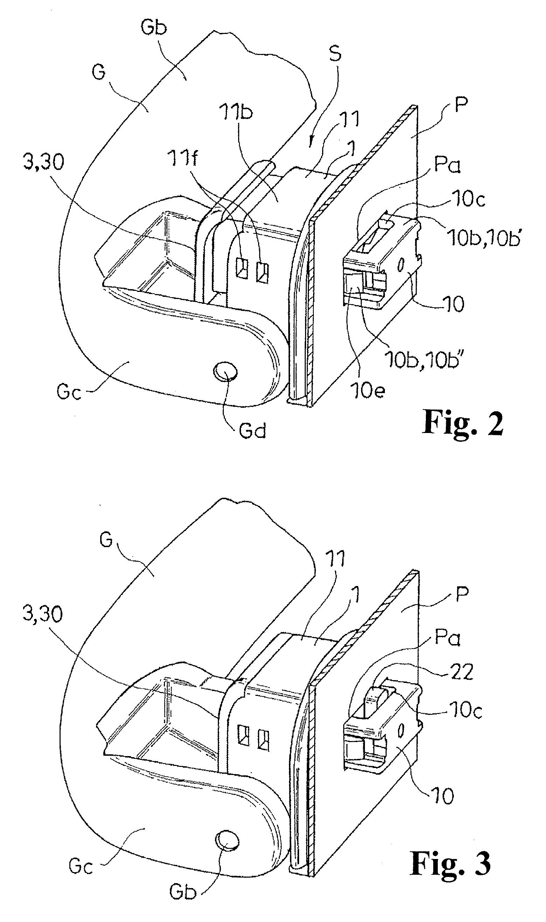

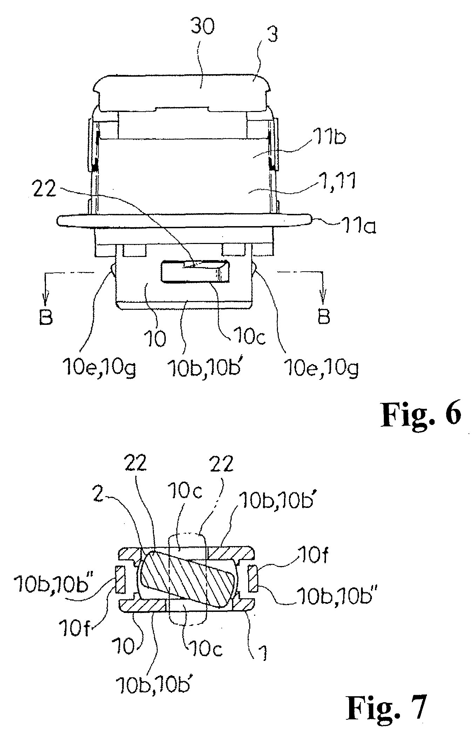

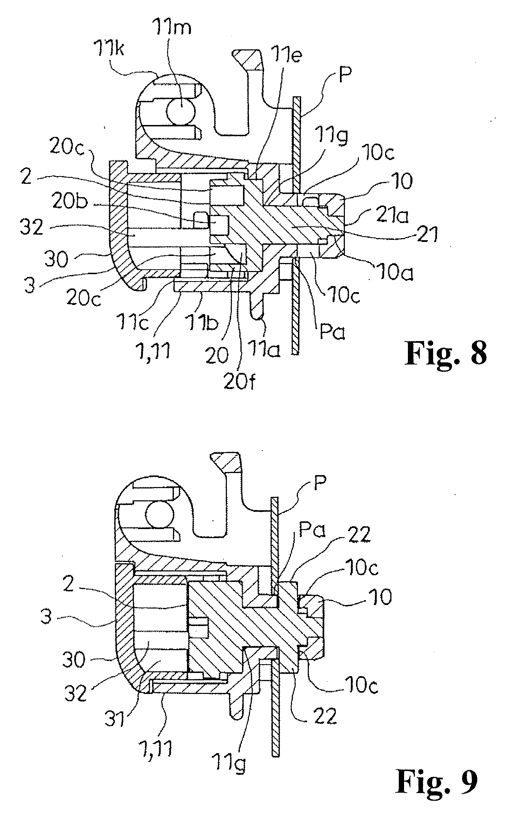

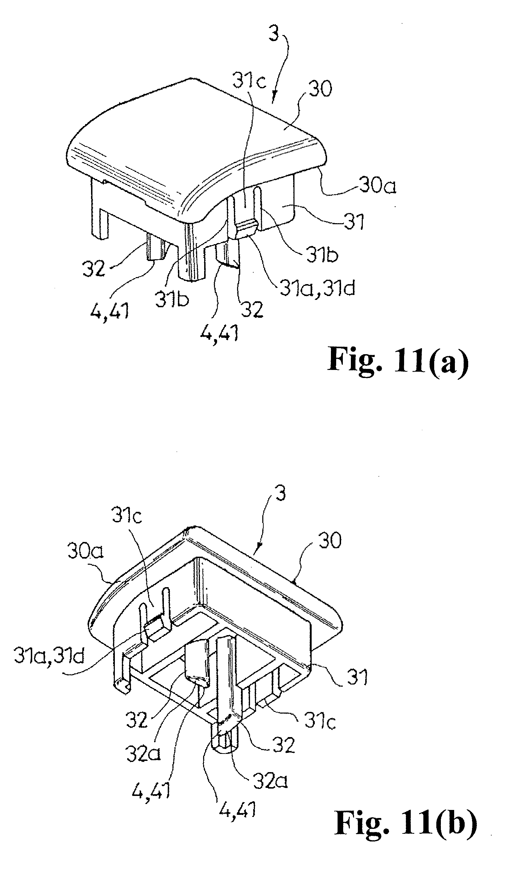

Hereinafter, typical examples for carrying out this invention are explained based on FIG. 1 to FIG. 13. It is to be noted that FIG. 1 shows the component formation of the mounting structure S when fixture G is made to function as assist grip Ga as an interior article, FIGS. 2 and 8 show a state that base 1 is temporarily stopped in panel P, and FIGS. 3 and 9 show the state that the side of base 1 side is permanently stopped (in the state of the final mounting) with respect to panel P. Further, in FIG. 7, the contour of wing piece 22 of lock member 2 in a state when lock member 2 has been twisted to a predetermined position by the pushing-in of operation member 3 is shown in an imaginary outline.

Mounting structure S of fixtures G according to this preferred embodiment of the invention is used to mount a wide variety of fixtures G in panel P using mounting hole Pa opened in panel P. In the depicted example, there is shown a structure to provide the interior of an automobile with the fixture G as an interior article of an automobile using mounting hole Pa provided in and penetrating through metallic panel P which forms part of an automobile. More specifically, in the depicted example, there is shown a structure to provide the ceiling side within the interior of an automobile with assist grip Ga as an interior article which is provided typically in the ceiling side using mounting hole Pa provided in metallic panel P which forms the ceiling side. The assist grip Ga is configured to form rotating combination section Gc in both ends of rod-shaped grip main body Gb and to be provided in the interior of an automobile, with each edge thereof rotatably assembled, by means of horizontal axis Gd, to below described non-insertion section 11 that does not enter into the mounting hole Pa of base 1. That is, in the depicted example, both edges of one assist grip Ga are respectively mounted in panel P by using base 1 which forms mounting structure S according to the preferred embodiment of the invention. In the depicted example, in either one of both edges of assist grip Ga, an intermediate portion of horizontal axis Gd is passed through rotary damper Ge and in the other edge, horizontal axis Gd pass through windings Gg of torsion coil spring Gf. At the time of nonuse, assist grip Ga is placed in a lying position pushed to the inside surface of the ceiling by the force of the spring Gf. When assist grip Ga is grasped, it is rotated in a vertical direction against the urging force of the spring Gf with the horizontal axis Gd as rotating center. Further, when the grasping is released, it is rotated back to the lying position by the urging force of spring Gf while such rotation back to the lying position is made slowly by the effect of the rotary damper Ge. Based on the mounting structure S according to this preferred embodiment of the invention, an interior article can be mounted to panel P by preventing insertion section 10 from coming out of the mounting hole Pa through moving lock member 2 to the predetermined position by the pushing-in operation of operation member 3 after having insertion section 10 of the under-mentioned base 1 inserted into mounting hole Pa of panel P. Because the blocking of the coming out of the insertion section is made by the movement of lock member 2, it is not necessary to fit and put insertion section 10 of base 1 in mounting hole Pa strongly, nor to have the insertion section 10 sheathed with an extra metallic clip. Thus, the insertion of insertion section 10 of base 1 into mounting hole Pa of panel P is easy, and does not cause any abnormal noises at the time of the insertion. Further, because all of the base 1, the below-described operation member 3 and lock member 2 can be made of a synthetic resin without inconvenience, mounting structure S according to the preferred embodiment of the invention contributes to the improvement of recyclability as well. Further, by returning lock member 2 in the predetermined position to the position before the movement, a fixture G or an interior article can be removed from the panel easily and a second or a follow-up mounting after the disassembly can also be performed without any drawback.

The mounting structure S is comprised of base 1, lock member 2 and operation member 3.

Base 1 either forms part of fixture G or is assembled to fixture G and is provided with insertion section 10 to mounting hole Pa of panel P. In the depicted example, the base 1 is assembled to an edge of assist grip Ga as fixture G by the horizontal axis Gd but it does not form part of fixture G.

In the depicted example, the base 1 has insertion section 10 to be inserted into mounting hole Pa of panel P from one side of the panel P and non-insertion section 11 of a size that does not allow it get into the mounting hole Pa. In the depicted example, the mounting hole Pa is configured to form a rectangle-shaped hole so as to make a hole edge almost rectangle. Insertion section 10 of base 1 has a cross section outer contour shape in orthogonal direction y at right angles to its insertion direction x almost rectangle-shaped, of about the same size as that of the mounting hole Pa following the example of the mounting hole Pa. Further, while the insertion section 10 forms a shape of a hollow square tube and has its interior space communicating with the non-insertion section 11 linked to the non-insertion section 11 in one tube edge, the non-insertion section 11 of base 1 has flange-shaped section 11a and is linked to the insertion section 10 on one side where the flange-shaped section 11a is sandwiched. Further, the non-insertion section 11 is provided with box-shaped section 11b in the other side across flange-shaped section 11a. The box-shaped section 11b has the side opposite to that of flange-shaped section 11a open to make box opening 11c. Further, the box-shaped section 11b is configured to have both the inner and the outer contour of the cross section in the orthogonal direction y with almost rectangle shape.

In the cross section of the orthogonal direction y, the interior space of the box-shaped section 11b is wider than that of the insertion section 10, and in the center of box bottom 11d of box-shaped section 11b, there is formed an almost rectangle-shaped communication opening 11g following the example of the interior space of insertion section 10. More particularly, in the depicted example, there is formed in box bottom 11d of box-shaped section 11b a circular bearing recess 11e similar to the example of the cross-section shape of the orthogonal direction y of columnar head 20 of the lock member 2 explained later, and the communication opening 11g is formed in the bottom of this bearing recess 11e.

Further, in the inside of box-shaped section 11b, there is formed a pair of elastically transformable wall panels 11h and 11h in a rising form from box bottom 11d toward box opening 11c. Between the pair of wall panels 11h and 11h, there is formed communication opening 11g having the opening at the width side of communication opening 11g along the plate surface of the wall panels 11h. Further, between the outside surface of the pair of wall panels 11h and 11h and the side wall of box-shaped section 11b facing the outside surface, there is formed inter space 11i which allows the elastic transformation. Further, in each of the pair of wall panels 11h and 11h, there is formed aperture hole 11j where protrusion 20a formed at a side face of columnar head 20 of lock member 2 described later enters.

Further, in each of the side walls facing the surface of the wall panels 11h in box-shaped section 11b, there are provided two engaging apertures 11f which are to be engaged with engaging claws 31a of below described operation member 3 respectively. The two engaging apertures 11f are provided to be spaced apart from each other in the insertion direction x.

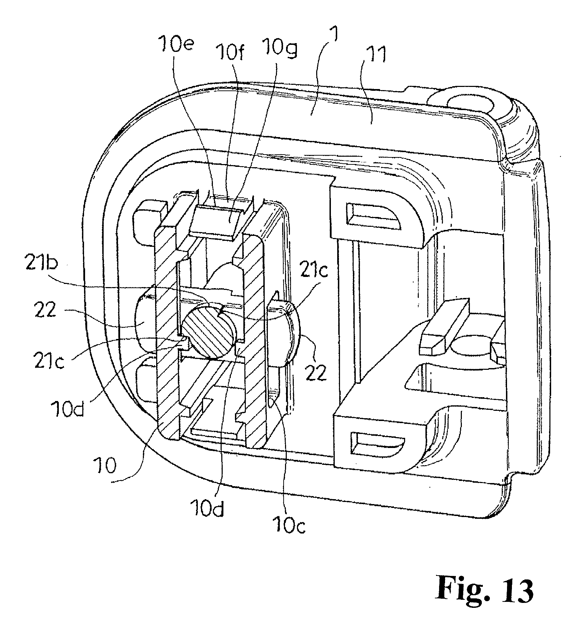

Further, in the other end of the tube of insertion section 10, there is formed bearing hole 10a into which the nose (the other edge 21a mentioned below) of shaft-shaped leg part 21 of below described lock member 2 fits. Further, in each of the two length-side sides 10b' and 10b' out of the four sides 10b∼10b of insertion section 10, there is formed an open section 10c which has wing piece 22 of below described lock member 2 protrude by rotation to the predetermined position of the lock member 2. Further, between the open section 10c and bearing hole 10a, in each of the two length-side sides 10b' and 10b', there is formed in bump surface 21c formed in shaft-shaped leg part 21 of below described lock member 2 a control section 10d which is knocked against bump surface 21c and controls rotation of lock member 2 which is higher than the predetermined position. (FIG. 13)

Further, in each of the two width-side sides 10b" and 10b" out of the four sides 10b∼10b of insertion section 10, there is formed a temporary stopper section 10e which elastically transforms and allows for insertion of the insertion section 10 into mounting hole Pa of the panel P and which engages with a hole edge of the mounting hole Pa by elastically reverting back to the original state in the insertion end position. This temporary stopper section 10e is configured such that the two sides 10b" and 10b" which become the width sides of insertion section 10 are formed by elastic piece 10f linked to the flange-shaped section 11a side only in one tube edge side of insertion section 10 and that raised ridge 10g is formed in the external side of the elastic piece 10f. The distance between raised ridges 10g of a pair of elastic pieces 10f - 10f is slightly greater than the distance between the mounting holes Pa in the lengthwise direction and further, panel P is adapted to fit between the flange-shaped section 11a and raised ridge 10g. It is thereby adapted that allowance of the insertion of insertion section 10 into the mounting hole Pa and the engagement of the mounting hole Pa with the hole edge in the insertion end position are made. That is to say that, in this example, by inserting insertion section 10 of base 1 into mounting hole Pa of panel P, base 1 can be temporarily fastened to the panel P prior to the pushing-in of operation member 3 .

Further, in the depicted example, in the external side of one of the side walls forming box-shaped section 11b, there is formed bracket section 11k provided with through-hole 11m of the horizontal axis Gd, and by using this bracket section 11k, assist grip Ga is assembled to base 1.

Lock member 2 is movably housed within the base 1. In this preferred embodiment of the invention, the lock member 2 is rotatably supported by base 1.

In the depicted example, the lock member 2 comprises columnar head 20, shaft-shaped leg part 21 and wing pieces 22. In one edge face of columnar head 20, one edge of shaft-shaped leg part 21 is integrally linked to the center thereof. Further, wing pieces 22 are spaced slightly from the other end 21a of shaft-shaped leg part 21 and protrude from this shaft-shaped leg part 21 along the orthogonal direction y. The wing pieces 22 are configured to make the cross section outer contour shape in the orthogonal direction y similar to the cross section inner contour shape of insertion section 10 of base 1 in the same direction, and are respectively provided at both sides of the shaft-shaped leg part 21 in the diametrical direction, by integrally linking the tabular body 22a to shaft-shaped leg part 21 in about the middle position in the lengthwise direction of an almost rectangular tabular body 22a which has a size to fit in the insertion section 10 in the position before the rotation of lock member 2.

Lock member 2 is housed within base 1 such that the shaft axis of the columnar head 20 and shaft-shaped leg part 21 align along the insertion direction x, and when it is rotated to the predetermined position by the insertion of the under-mentioned operation member 3, wing pieces 22 protrude outwardly from each of the two open sections 10c of insertion section 10.

In the depicted example, columnar head 20 makes its length along the insertion direction x smaller than the depth of box-shaped section 11b of base 1 in the same direction, and by having the outer peripheral surface of the linking side with shaft-shaped leg part 21 have sliding contact with the recess peripheral surface of bearing recess 11e formed in box bottom 11d of this box-shaped section 11b, columnar head 20 holds this linking side within bearing recess 11e and is rotatably supported by base 1. (FIG. 8)

Further, shaft-shaped leg part 21 is located within insertion section 10 through communication opening 11g of base 1. The other end 21a of shaft-shaped leg part 21 is housed in the bearing hole 10a formed in insertion section 10 and is rotatably supported by the bearing hole 10a.

Between the other end 21a and wing piece 22 in the shaft-shaped leg part 21 and within a defined area in the direction around the shaft center of the shaft-shaped leg part 21, there is formed a wall increase section 21b to make the shaft-shaped leg part 21 thicker. The shaft-shaped leg part 21 has thus two bump surfaces 21c, 21c by this wall increase section 21b. And, the lengthwise direction of the tabular body 22a which makes wing piece 22 extends approximately along the lengthwise direction of insertion section 10 at the position where either one of these two bump surfaces 21c, 21c abuts against either one of the control sections 10d of base 1, so that wing pieces 22 do not protrude from open section 10c. (FIG. 8 / the position of lock member 2 before rotation) From this state, lock member 2 is made to be able to rotate to the position where the other of the two the bump surfaces 21c, 21c abuts against the other of the control sections 10d of base 1. And in this position, wing pieces 22 protrude outwardly from each of the two open sections 10c of insertion section 10. (FIG. 9, FIG. 13 / predetermined position) That is to say, thereby, when lock member 2 is moved to the predetermined position, coming out of base 1 from mounting hole Pa of the panel P is prevented by having wing piece 22 as part of lock member 2 protrude from the open section 10c. In this predetermined position, the surface of wing piece 22 of lock member 2 facing the side of the flange-shaped section 11a is located at about the same position as the temporary stopper section 10e.

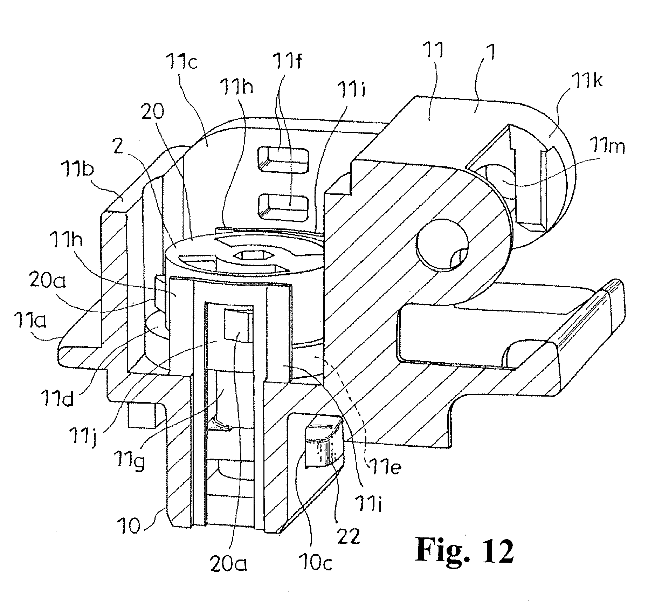

Further, in the depicted example, at the time of the rotation of the lock member 2, there are provided four protrusions 20a...20a in the side face of columnar head 20 to be spaced apart from each other in the direction around the shaft center thereof. And, in the position before rotation of lock member 2, one of such protrusions enters into aperture hole 11j of the wall panel 11h of base 1 and when lock member 2 is rotated, the protrusion 20a starts coming out while having wall panel 11h elastically deform. Then, one of the other protrusions 20a crosses over wall panel 11h while elastically deforming the wall panel 11h, and enters into aperture hole 11j of the wall panel 11h in the predetermined position. (FIG. 12)

Further, in this preferred embodiment of the invention, in the center of the other edge face in columnar head 20 of lock member 2 facing the side of box opening 11c of box-shaped section 11b of base 1, there is formed a tool engagement section 20b so as to be engaged with a tool and to make it possible for lock member 2 rotated to the predetermined position to be rotated back to the position before such rotation by the tool. In the depicted example, the engagement section 20b is configured as a hexagon-shaped hole in which the edges of a hexagon nut are inserted without play. Thereby, in this preferred embodiment of the invention, as will be explained below, after having removed operation member 3 from base 1, by having a tool engage with this engagement section 20b and rotating back lock member 2 to the position before rotation using this tool, a part of lock member 2 (wing piece 22 in the depicted example) can be drawn within insertion section 10 and the state that the coming out of base 1 from mounting hole Pa of panel P is prevented by lock member 2 can be released easily.

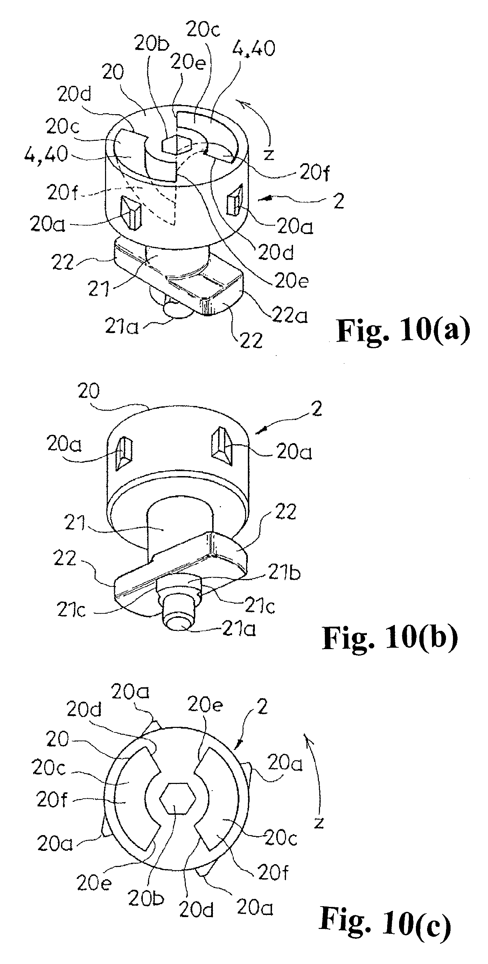

Further, in this preferred embodiment of the invention, in the other edge face of lock member 2, there is formed on both sides across engagement section 20b to the tool, a cam groove 20c extending along the circular arc of a virtual circle around this engagement section 20b. The cam groove 20c is formed to be gradually deepened from the side of groove one edge 20d toward the other edge 20e to make groove bottom 20f inclined. Further, both cam grooves 20c and 20c are formed to be gradually deepened from the front side toward the other side of the rotation, in the direction of rotation z toward the predetermined position of lock member 2. FIG. 10(a)]

Operation member 3 is slidably assembled to the base 1. In the depicted example, the operation member 3 comprises operation board section 30, packing section 31 to box-shaped section 11b of non-insertion section 11 of base 1 and pushing-in leg 32.

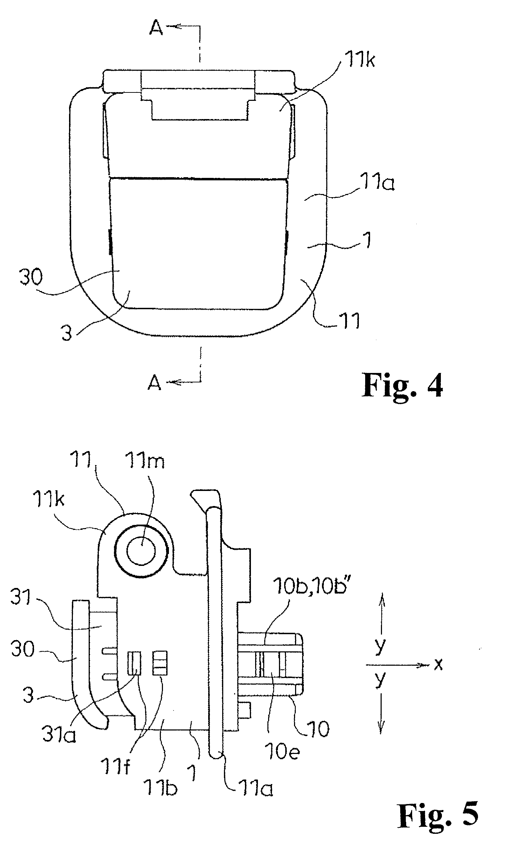

Packing section 31 is configured to form a shape of a square tube which is configured to have the cross section outer contour shape of the same direction similar to the cross section inner contour shape of the orthogonal direction y of box-shaped section 11b of base 1. The dimension of packing section 31 in the insertion direction x is smaller than that of box-shaped section 11b of the insertion direction x. There is formed an engaging claw 31a in each width-side side plate of packing section 31. The engaging claw 31a is provided in each width-side side plate of packing section 31 respectively, by forming the width-side side plate open to have a groove edge in one tube edge located in the receiving end side for packing section 31 to box-shaped section 11b, and by forming projection 31d in the external side of the free end side of elastic piece 31c formed by providing two split grooves 31b, 31b which follow along the insertion direction x. And, in the depicted example, in a state that lock member 2 is in the position before the rotation, base 1 and operation member 3 are assembled in a state that the engaging claw 31a is put into one engaging aperture 11f on the side of box opening 11c from the inside, out of the two engaging apertures 11f, 11f formed in box-shaped section 11b. (FIG. 5) From this state, operation member 3 can be pushed in base 1 such that the engaging claw 31a becomes engaged with the engaging aperture 11f on the side of box bottom 11d out of the two engaging apertures 11f, 11f formed in box-shaped section 11b. That is to say, in this preferred embodiment of the invention, the engaging aperture 11f and engaging claw 31a function as engagement sections which engage with each other respectively both in the position before the pushing-in of operation member 3 and in the position after the pushing-in. When operation member 3 is pushed from the position before the pushing-in, engaging claw 31a elastically deforms and starts coming out from engaging aperture 11f and pushing-in of operation member 3 is allowed. When operation member 3 is completely pushed in, engagement claw 31a enters into the other engagement aperture 11f by spring action. Thereby, in the depicted example, unless operation member 3 is pushed by a force disengaging such engagement as mentioned before, lock member 2 is prevented from moving to a predetermined position and the state that lock member 2 is in a predetermined position can stably be maintained by the engagement in the position after the pushing-in.

Operation board section 30 is configured to be tabular to block the other end of the tube of packing section 31. Outer edge 30a of this operation board section 30 is located outside of the outer contour of packing section 31. So the engagement of the engaging claw 31a can be disengaged by pulling operation member 3 with a predetermined force using the outer edge 30a side of this operation board section 30 and packing section 31 of operation member 3 can thus be pulled out from within base 1.

Pushing-in leg 32 is formed to protrude from the inside surface of operation board section 30 along the insertion direction x and has leg edge 32a located ahead of the opening of one tube edge of packing section 31. Further, there are provided two pushing-in legs 32 inside packing section 31 and, in the position before pushing-in, leg edge 32a of either one of the pushing-in legs 32 is located in groove one edge 20d side of either one of cam grooves 20c of lock member 2 in the position before rotation, And, leg edge 32a of the other of the pushing-in legs 32 is adapted to be located in groove one edge 20d side of the other of cam grooves 20c of the lock member 2. As described above, the cam groove 20c is formed to be gradually deepened from its groove one edge 20d side toward the other edge 20e side and because it is formed to extend along the direction of rotation z of lock member 2, when operation member 3 is pushed from the position before pushing-in, lock member 2 is rotated to the predetermined position from the position before rotation.

That is to say, in this preferred embodiment of the invention, lock member 2 and operation member 3 are provided with cam means 4 for moving lock member 2 to a predetermined position along with the pushing-in of operation member 3. And, the cam means 4 comprises cam face 40 following the direction of lock member 2 around the rotating center and abutment 41 to abut against the cam face 40 by the pushing-in of operation member 3. In the depicted example, groove bottom 20f of the cam groove 20c functions as the cam face 40 and leg edge 32a of pushing-in leg 32 functions as the abutment 41.

The provision of elastically deforming property to base 1 which forms part of mounting structure S and the portion of operation member 3 which should have elastically deforming property as described above can be assured easily by molding these members of synthetic resin.
The specification, claims, drawings and abstract of Japanese Patent Application No. 2009-086487 filed on March 31, 2009 are incorporated herein by reference as disclosure of the specification of this invention.

## Claims

1. A fixture mounting structure for mounting a fixture to a panel using a mounting hole opened in the panel, comprising:
a base forming a part of the fixture or assembled thereto and having an insertion section for insertion into the mounting hole in the panel;
a lock member movably retained in the base; and
an operation member slidably assembled in the base,
wherein the base includes an open section at a side section of the insertion section, and
cam means formed in the lock member and the operation member, the cam means moving the lock member to a predetermined position when the operation member is pushed, and
wherein when the lock member is moved to a predetermined position, a part of the lock member is protruded from the opening section to prevent the base from coming out of the mounting hole in the panel.

2. A fixture mounting structure according to claim 1 wherein, the lock member is rotatably supported by the base,
the cam means comprises a cam face section following a direction around the rotating center of the lock member and an abutment section which abuts against the cam face section by pushing-in of the operation member, and
the lock member is provided with either one of the cam face section or the abutment section and the operation member is provided with the other of the cam face section or the abutment section.

3. A fixture mounting structure according to claim 1 or claim 2 wherein the insertion section of the base is allowed to be inserted into the mounting hole of the panel by elastically deforming a part thereof, and the insertion section engages the hole edge of the mounting hole by elastically returning back to an original state in an insertion end position.

4. A fixture mounting structure according to any one of claims 1 through 3, wherein the operation member is removably assembled to the base, and the lock member includes an engagement section for a tool in order that the lock member rotated to the predetermined position can be rotated back to the position before the rotation by using the tool.

5. A fixture mounting structure according to any one of claims 1 through 4, wherein the base and the operation member include engagement sections which engage with each other in positions before and after the pushing-in of the operation member, respectively.

6. An interior article mounting structure according to any one of claims 1 through 5, wherein the fixture in the mounting structure is an interior article of an automobile.
